Europäisches Patentamt

European Patent Office

Office européen des brevets

(11) Publication number: **0 100 671**
**B1**

(12) **EUROPEAN PATENT SPECIFICATION**

(45) Date of publication of patent specification: **09.12.87**

(51) Int. Cl.⁴: **C 04 B 24/24**

(21) Application number: **83304419.1**

(22) Date of filing: **01.08.83**

(54) Water-inseparable cement compositions.

(30) Priority: **30.07.82 JP 131904/82**
**22.09.82 JP 163900/82**

(43) Date of publication of application:
**15.02.84 Bulletin 84/07**

(45) Publication of the grant of the patent:
**09.12.87 Bulletin 87/50**

(84) Designated Contracting States:
**DE FR GB NL SE**

(56) References cited:
**DE-A-2 541 747**
**US-A-2 868 753**
**US-A-3 197 428**
**US-A-3 877 522**
**US-A-3 931 096**
**US-A-3 943 996**

(73) Proprietor: **TAKENAKA KOMUTEN CO. LTD.**
**27, 4-chome, Honmachi Higashi-ku**
**Osaka-shi Osaka 541 (JP)**
(73) Proprietor: **TAKENAKA DOBOKU CO. LTD.**
**21-1, 8-chome, Ginza Chuo-ku**
**Tokyo 104 (JP)**
(73) Proprietor: **SANKYO CHEMICAL INDUSTRIES LTD.**
**9-19, 3-chome, Ginza Chuo-ku**
**Tokyo (JP)**

(72) Inventor: **Sakuta, Masaharu**
**3-8-331, 2-chome Minamisuna**
**Koto-ku Tokyo 136 (JP)**
Inventor: **Kiya, Soichi**
**432-106-1104, Terada-cho**
**Hachioji-shi Tokyo 193 (JP)**
Inventor: **Uchizaki, Iwao**
**5-1-122, 1-chome Motoazabu**
**Minato-ku Tokyo 106 (JP)**
Inventor: **Yoshioka, Yasuhiko**
**3980-5, Jindaiji**
**Mitaka-shi Tokyo 181 (JP)**
Inventor: **Ito, Koichi**
**21-16, 3-chome Kugahara**
**Ota-ku Tokyo 146 (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 100 671**

(72) Inventor: Saito, Toshio
20-335, 2-chome Hibarigaoka
Kashiwa-shi Chiba 227 (JP)
Inventor: Kaya, Tadahiro
20-24, 1-chome, Fujimigaoka Ninomiya-cho
Naka-gun Kanagawa 259-01 (JP)
Inventor: Shioya, Tsunetoshi
11-33, 1-chome Honkugenuma
Fujisawa-shi Kanagawa 251 (JP)
Inventor: Shimoyama, Yoshifumi
313-7, Shimotsuchidana
Fujisawa-shi Kanagawa 251 (JP)
Inventor: Yamakawa, Hiroyuki
98-4, Shimotsuruma
Yamato-shi Kanagawa 242 (JP)

(74) Representative: Deans, Michael John Percy et al
Lloyd Wise, Tregear & CO. Norman House
105-109 Strand
London WC2R OAE (GB)

# 0 100 671

## Description

The present invention relates to cement compositions.

As concrete is being laid under water, the cement may become separated or washed away from a part of the aggregate upon contact with the water, either as the concrete mix is falling through the water or as the concrete mix is spreading in a widthwise direction under water. The part of the concrete mix from which the cement has been separated or washed away subsequently deteriorates. In order to prevent the cement from becoming separated from the concrete mix in water, a viscosity building agent or viscosity builder such as an acrylic polymer compound, a cellulose derivative or the like may be included in an amount ranging from about 2% to about 4% by weight based on the cement content of the mix. A concrete mix containing such a polymer viscosity builder tends to have a delayed setting time and to have a lower strength, particularly initially, than a concrete mix containing no such agent. This tendency becomes more pronounced as the amount of the viscosity builder is increased. These drawbacks are the biggest obstacle in improving the performance of concrete laid under water.

The present invention has arisen out of our work seeking to provide cement compositions which do not cause such a delay in setting time or reduction in strength, while retaining the ability to prevent separation of the cement from the composition under water.

There have been a number of suggestions in the art for introducing additives into cement compositions for a number of specific purposes.

Thus, Guilbault et al in U.S. Patents 3,943,996 and 3,931,096 suggest the use of a water soluble polymer of methacrylamidopropyltrimethylammonium chloride. Guilbault et al disclose the use of water soluble copolymers of this material and acrylamide. Guilbault et al are concerned to achieve a low fluid loss in what they describe as "cementing compositions": that is cement compositions without any aggregate. Their modified hydraulic cement is used for cementing in deep well structures and requires especially delayed thickening and low water loss to ensure that the cement does not set until it reaches the desired deep well structure.

U.S. Patent 3,877,522 is concerned with the provision of radiation-induced polymers in cement slurries, again for cementing wells in fluid communication with a subterranean reservoir.

U.S. Patent 2,868,753 to Morgan et al is also concerned essentially with hydraulic cement compositions for pumping to a remote position in a deep oil or gas well. Morgan emphasises the importance of keeping the cement mixture fluid and pumpable while it is being delivered to its site. The Morgan et al hydraulic cement compositions contain acrylamide-acrylic acid copolymers. Morgan et al have discovered a class of such copolymers which can achieve the desired effect in the 30 minute fluid loss. These copolymers are defined as being an alkali metal salt of a copolymer of from 90 to 70 mol% of acrylamide and 10 to 30 mol % of acrylic acid having a molecular weight of at least 150,000 and not less than that of a copolymer obtained by reacting a mixture of 88 grams of acrylamide and 12 grams of acrylic acid with 0.25 grams of ammonium persulphate in 900 grams of water at about 70° to 80°C for 4 hours.

We are unable to say whether any of these Patent proposals have been put into commercial use. It is clear, however, that the cement compositions to which they each relate are specially devised for use in a particular context, namely in the pumping of cement compositions into deep well structures in the oil and gas extraction industry. None is concerned with the laying of cement compositions under water, the field to which our research relates.

Where an acrylic polymer composition is employed as a viscosity enhancer in a cement composition with a view to preventing disintegration of a concrete aggregate or mortar mix in water, we have found that where the acrylic polymer composition comprises a polyacrylamide compound to which a dialdehyde is added, the amount of the acrylic polymer compound may be greatly decreased while still enhancing the effect of preventing disintegration in water; and that acceptably good results can be produced at a far cheaper cost and without too great a reduction in concrete strength or undue delay in concrete setting time.

Accordingly, the present invention provides a cement composition comprising a polyacrylamide compound, and being characterised in that it incorporates a polyacrylamide composition present in an amount of from 0.1 to 3% by weight of the amount of cement, said polyacrylamide composition comprising a polyacrylamide compound with a dialdehyde added thereto, and in that said cement composition is capable of being laid under water without substantial separation or washing out of cement.

We have found that useful polyacrylamide compounds include, for example, polyacrylamide, polymethacrylamide, partially Mannich-modified polyacrylamide or a copolymer of acrylamide or methacrylamide such as a copolymer thereof with a monomer selected from acrylic acid, methacrylic acid, sodium acrylate, vinylsulphonic acid, 2-acrylamide-2-methylpropanesulphonic acid, dimethylaminopropyl methacrylamide, dialkylaminoalkyl acrylate or its quaternary salt, dialkylaminoalkyl methacrylate or its quaternary salt, diallyldialkyl ammonium salt or other vinyl monomer. Among these compounds we have found polyacrylamide, a copolymer of acrylamide with sodium acrylate, and a polyacrylamide partial hydrolysate to be particularly useful.

We have found that in general the amount of the polyacrylamide compound should be 0.1% or more by weight based on the cement content of a concrete mix in order to provide the concrete mix with the property of not disintegrating in water; when the amount thereof exceeds 3% by weight, the concrete mix tends to become too viscous to handle with ease and this becomes a cause of a delay in setting time.

3

The dialdehyde to be used may include, for example, glyoxal, malonaldehyde, succinaldehyde, fumaraldehyde, male aldehyde, glutaraldehyde and adipaldehyde. A highly reactive glutaraldehyde is particularly useful.

The amount of the dialdehyde is determined so as to provide a concrete mix having the properties of not disintegrating in water and of retaining flowability to an appropriate degree. We have found amounts of dialdehyde in the range from 0.1 to 20% by weight, based on the amount of polyacrylamide compound added to the cement composition, to be useful and from 0.1 to 10% by weight to be preferred. The preferred amount of dialdehyde depends on the particular dialdehyde.

There is a positive interrelation between the molecular weight of the partial hydrolysate of polyacrylamide and the viscosity of its aqueous solution. The concrete mix should have a viscosity sufficient substantially to prevent the separation of the cement from the aggregate in water. We have found that the polymer compound should desirably have a molecular weight higher than one million, preferably higher than three millions, and more preferably higher than ten millions.

We have found that lessons of the present invention apply equally well to mortar mixes as they do to concrete mixes, and the term "cement composition" as used herein is intended to encompass both concrete mixes comprising aggregrate in addition to cement and mortar mixes comprising fine aggregate (i.e. sand) in addition to cement.

The polyacrylamide compound may be used by mixing it with the cement in advance, by adding it to the composition, or by adding a solution of it in water to the composition. The mixing procedure may be compound. The easiest way possible for homogeneously mixing it into the composition may readily be determined.

The invention is hereinafter more particularly described by way of example only by reference to a number of Examples.

Example 1

A mortar mixer was filled with 520 g of cement and 130 g of water, and the mixture was mixed to give a cement paste having a water-cement ratio of 25%. To the resulting paste was added, in each case, a polyacrylamide partial hydrolysate in the amount of 0.5 and 1.0% by weight based on the cement content, respectively, in the form of a 2% aqueous solution. The paste was then adjusted by the addition of water so as to attain a whole water-cement ratio of 65%. To the homogeneous paste was added 1,040 g of standard sand ("Toyoura"), and the resulting paste was mixed to give a homogeneously-mixed specimen mortar mix 1.

To this mortar mix 1 was added glutaraldehyde in the amounts of 0.5, 1.0 and 2.0% by weight based on the partial hydrolysate content, respectively, and the mixture was mixed in the same manner to produce a specimen mortar mix 2.

The resulting specimen mortar mix 2 was filled into a cylindrical container having a diameter of 5 cm and a height of 5 cm and was then poured so that it fell by gravity from a position 10 cm above the water surface in a 1-litre volume measuring cylinder with 1 litre of water filled therein. The test results were obtained by measuring turbidity of water by transmittance at a wavelength of 660 mμm with a photoelectric photometer. The test results are shown in Table 1 below.

TABLE 1
Test results for mortar specimen 2:

| Viscosity builder | Amount of viscosity builder (% by wt.) based on the cement content | Amount of glutaraldehyde (% by wt.) based on the viscosity builder content | Flow (cm) | Transmittance (%) |
|---|---|---|---|---|
| Polyacrylamide partial hydrolysate | 0.5 | 0 | 20.0 | 85 |
| | | 1.0 | 18.5 | 92 |
| | | 2.0 | 17.0 | 98 |
| | 1.0 | 0 | 18.0 | 92 |
| | | 0.5 | 17.0 | 96 |
| | | 1.0 | 15.5 | 99 |

4

From the test results above, it was found that (a) the addition of the viscosity builder renders transmittance remarkably high. That is to say, when mortar is falling through water, the amount of cement separated from the mortar mix is reduced to a considerably small quantity. It is also found that (b) transmittance is further improved by the addition of glutaraldehyde. It becomes apparent that the addition of glutaraldehyde merely in the amount of 2% with respect to the polyacrylamide partial hydrolysate content can reduce the amount of polyacrylamide partial hydrolysate required for attaining the same degree of transmittance as above to a half or less.

Example 2

TABLE 2

| Water-cement ratio (%) | Air content (%) | Unit amounts (kg/m$^3$) | | | |
| --- | --- | --- | --- | --- | --- |
| | | Water | Cement | Fine aggregate | Coarse aggregate |
| 50 | 1 | 200 | 400 | 692 | 1,055 |

To a concrete mix of the constituent proportions as illustrated in Table 2 above was added polyacrylamide partial hydrolysate in the amount of 0.1, 0.4, 0.6, 0.8, 1.5, 2.0 and 3.0% by weight, respectively, based on the cement content. This composition was mixed, and glutaraldehyde was added in an amount ranging from 0.1 to 20% by weight based on the polyacrylamide partial hydrolysate content to the concrete mix to give a specimen concrete mix 3. The specimen concrete mix 3 was tested in the same manner as in the case of the specimen mortar mixes and measured for turbidity of water in the same manner as above. The specimen concrete mix 3 was filled into a container in the form of a truncated cone having a bottom diameter of 5 cm, a top diameter of 7 cm and a depth of 8 cm. The specimen concrete mix 4 was poured so as to fall by gravity from the container from a position 10 cm above the water surface in a cylindrical container having a diameter of 20 cm and a depth of 26 cm with water filled to a depth of 16 cm therein. The turbidity of water was observed by measuring transmittance at a wavelength of 660 mμm with a photoelectric photometer.

A cylindrical specimen 4 having a diameter of 15 cm and a height of 30 cm was also obtained from the specimen concrete mix 3. After being cured at 20°C for 28 days in water, the specimens 4 were measured for compressive strength. The test results are shown in Table 3.

TABLE 3
Test results for concrete specimens 3 and 4

| Amount of viscosity -builder (% by wt.) based on the cement content | Amount of glutaraldehyde (% by wt.) based on the viscosity builder content | Transmittance (%) | Slump (cm) | Compressive strength (MPa) |
|---|---|---|---|---|
| — | — | 3.0 | 22.0 | 33.5 |
| 0.1 | — | 34.0 | 21.0 | 35.1 |
|  | 10 | 69.5 | 19.5 | 37.1 |
|  | 20 | 85.0 | 18.5 | 37.3 |
| 0.4 | — | 72.0 | 20.0 | 32.7 |
|  | 1.0 | 85.0 | 19.5 | 34.2 |
|  | 2.0 | 92.5 | 17.0 | 35.8 |
| 0.6 | — | 69.0 | 22.5 | 32.2 |
|  | 0.5 | 86.0 | 21.0 | 36.5 |
|  | 1.0 | 97.5 | 19.5 | 43.1 |
| 0.8 | — | 80.0 | 22.0 | 34.0 |
|  | 0.5 | 89.0 | 21.0 | 36.1 |
|  | 1.0 | 98.5 | 19.0 | 40.9 |
| 1.0 | — | 89.5 | 21.5 | 34.3 |
|  | 0.5 | 96.0 | 20.0 | 38.3 |
| 1.5 | — | 94.0 | 21.0 | 35.8 |
|  | 0.2 | 96.0 | 21.0 | 36.4 |
| 2.0 | — | 96.0 | 20.5 | 37.0 |
|  | 0.2 | 99.0 | 20.0 | 37.3 |
| 3.0 | — | 98.0 | 18.0 | 33.0 |
|  | 0.1 | 99.0 | 17.0 | 33.3 |

From the above test results, it was found that (a) the addition of glutaraldehyde improves transmittance to a considerable extent in the same manner as in the case of the above specimen mortar mix. It was also found that (b), in instances where transmittance is set to be 95%, although the single addition of the polyacrylamide partial hydrolysate requires 2.0% by weight or more based on the cement content, the use of glutaraldehyde in the amount of 1.0% by weight based on the polyacrylamide partial hydrolysate content can reduce the amount of the polyacrylamide partial hydrolysate required to 0.6% by weight, that is, to less than 1/3, based on the cement content. It was further found that (c) the addition of glutaraldehyde increases compressive strength.

It was found that the concrete mix according to this example was provided with viscosity and, as a result, gained the property of preventing disintegration in water. In particular, when compound to the single addition of the polyacrylamide compound, the addition of the dialdehyde can reduce the amount of

6

the polyacrylamide compound required by a considerable extent. As a result of enhancing the property of preventing disintegration in water as well as improving strength by the addition of the dialdehyde, concrete capable of being laid under water can be produced at a cheaper cost and with a lesser reduction in strength than for conventional concrete compositions. The compositions containing a polyacrylamide partial hydrolysate but not glutaraldehyde are comparative compositions. These compositions are claimed in divisional application 86114721.3 (EP—A—        ).

## Claims

1. A cement composition comprising a polyacrylamide compound, characterised in that it incorporates a polyacrylamide composition in an amount of from 0.1 to 3% by weight of the amount of cement, said polyacrylamide composition comprising a polyacrylamide compound with a dialdehyde added thereto, and in that said cement composition is capable of being laid under water without substantial separation or washing out of cement.

2. A composition according to Claim 1, further characterised in that said polyacrylamide compound comprises polyacrylamide, polymethacrylamide, partially Mannich-modified polyacrylamide, a copolymer of acrylamide, a copolymer of methacrylamide or polyacrylamide partial hydrolysate.

3. A composition according to Claim 2, further characterised in that the said copolymers of acrylamide or of methacrylamide comprise a copolymer with a monomer consisting of sodium acrylate, acrylic acid, methacrylic acid, vinylsulphonic acid, 2-acrylamide-2-methylpropanesulphonic acid, dimethylaminopropyl methacrylamide, dialkylaminoalkyl acrylate or a quaternary salt thereof, dialkylaminoalkyl methacrylate or a quaternary salt thereof, diallyldialkyl ammonium salt or other vinyl monomers.

4. A composition according to any of Claims 1 to 3, further characterised in that said polyacrylamide compound is one having a molecular weight of not lower than one million.

5. A composition according to any preceding Claim, further characterised in that the said polyacrylamide compound is one having a molecular weight of not lower than three millions.

6. A composition according to any preceding Claim, further characterised in that the dialdehyde is present in an amount of from 0.1 to 20% by weight based on said polyacrylamide compound.

7. A composition according to any preceding Claim, further characterised in that said dialdehyde comprises glyoxal, malonaldehyde, succinaldehyde, fumaraldehyde, male aldehyde, glutaraldehyde or adipaldehyde.

8. A composition according to both Claims 6 and 7, further characterised in that said dialdehyde is glutaraldehyde and is present in an amount of from 0.1 to 10% by weight based on said polyacrylamide compound.

9. Concrete comprising a cement composition according to any preceding Claim and incorporating aggregate.

10. Mortar comprising a cement composition according to any of Claims 1 to 8 and incorporating sand.

## Patentansprüche

1. Zementmischung enthaltend eine Polyacrylamid-Verbindung, dadurch gekennzeichnet, daß sie eine Polyacrylamid-Zusammensetzung in einer Menge von zwischen 0,1 und 3 Gew.-%, bezogen auf Zementmenge, enthält, wobei diese Polyacrylamid-Zusammensetzung eine Polyacrylamid-Verbindung enthält, zu der eine Dialdehyd gegeben wird, und daß die Zementmischung unter Wasser verarbeitet werden kann, ohne daß eine Auftrennung oder Auswaschen des Zements in nennenswertem Umfang auftritt.

2. Mischung nach Anspruch 1, dadurch gekennzeichnet, daß die Polyacrylamid-Verbindung Polyacrylamid, Polymethacrylamid, teilweise Mannich-modifiziertes Polyacrylamid, ein Copolymer von Acrylamid, ein Copolymer von Methacrylamid oder teilweise hydrolysiertes Polyacrylamid ist.

3. Mischung nach Anspruch 2, dadurch gekennzeichnet, daß die Copolymeren von Acrylamid oder Methacrylamid Copolymere mit einem Monomer bestehend aus Natriumacrylat, Acrylsäure, Methacrylsäure, Vinylsulfonsäure, 2-Acrylamid-2-methylpropansulfonsäure, Dimethylaminopropylamid, Dialkylaminoalkylacrylat oder einem quaternären Salz dieser Verbindung, Dialkylaminoalkylmethacrylat oder einem quaternären Salz dieser Verbindung, Diallyldialkylammoniumsalz oder anderen Vinylmonomeren sind.

4. Mischung gemäß einem der Ansprüche 1 bis 3, dadurch gekennzeichnet, daß die Polyacrylamid-Verbindung eine solche mit einem Molekulargewicht von nicht weniger als einer Million ist.

5. Mischung gemäß einem der vorhergehenden Ansprüche, dadurch gekennzeichnet, daß die Polyacrylamid-Verbindung eine solche mit einem Molekulargewicht von nicht weniger als drei Millionen ist.

6. Mischung nach einem der vorhergehenden Ansprüche, dadurch gekennzeichnet, daß der Dialdehyd in einer Menge von zwischen 0,1 und 20 Gew.%, bezogen auf die Polyacrylamid-Verbindung vorliegt.

7. Mischung gemäß einem der vorhergehenden Ansprüche, dadurch gekennzeichnet, daß der Dialdehyd Glyoxal, Malonaldehyd, Succinaldehyd, Fumaraldehyd, Maleinaldehyd, Glutaraldehyd oder Adipaldehyd ist.

8. Mischung gemäß den beiden Ansprüchen 6 und 7, dadurch gekennzeichnet, daß der Dialdehyd Glutaraldehyd ist und einer Menge von zwischen 0,1 und 10 Gew.%, bezogen auf die Polyacrylamid-Verbindung, vorliegt.

9. Beton enthaltend eine Zementmischung gemäß einem der vorhergehenden Ansprüche und eingearbeitete Zuschlagstoffe.

10. Mörtel enthaltend eine Zementmischung gemäß einem der Ansprüche 1 bis 8 und zugemischten Sand.

**Revendications**

1. Composition de ciment comprenant un composé de polyacrylamide, caractérisée en ce qu'elle est constituée par une composition de polyacrylamide présent dans une quantité allant de 0,1 à 3% en poids par rapport au ciment, ladite composition de polyacrylamide contenant un composé de polyacrylamide additionné d'un dialdéhyde, et en ce que ladite composition de ciment peut être coulée sous l'eau sans séparation ou extraction par lavage substantielles du ciment.

2. Composition selon la revendication 1, caractérisée en ce que le composé de polyacrylamide est choisi parmi un polyacrylamide, un polyméthacrylamide, un polyacrylamide partiellement modifié selon Mannich, un copolymère d'acrylamide, un copolymère de méthacrylamide ou de polyacrylamide partiellement hydrolysé.

3. Composition selon la revendication 2, caractérisée en ce que, dans le copolymère d'acrylamide ou de méthacrylamide, le comonomère est choisi parmi l'acrylate de sodium, l'acide acrylique, l'acide méthacrylique, l'acide vinylsulfonique, l'acide 2-acrylamide-2-méthylpropane sulfonique, le diméthylaminopropylméthacrylamide, l'acrylate de dialkylaminoalkyle ou ses sels quaternaires, le méthacrylate de dialkylaminoalkyle ou ses sels quaternaires, les sels d'ammonium de diallyldialkyle ou d'autres monomères vinyliques.

4. Composition selon l'une quelconque des revendications 1 à 3, caractérisée en ce que le composé de polyacrylamide possède un poids moléculaire supérieur ou égal à un million.

5. Composition selon l'une quelconque des revendications précédentes, caractérisée en ce que le composé de polyacrylamide possède un poids moléculaire supérieur ou égal à trois millions.

6. Composition selon l'une des revendications précédentes, caractérisée en ce que la quantité de dialdéhyde est de 0,1 à 20% en poids par rapport au composé de polyacrylamide.

7. Composition selon l'une quelconque des revendications précédentes, caractérisée en ce que le dialdéhyde est choisi parmi le glyoxal, le malonaldéhyde, le succinaldéhyde, le fumaraldéhyde, l'aldéhyde malique, le glutaraldéhyde et l'adipaldéhyde.

8. Composition selon les revendications 6 et 7, caractérisée en ce que le dialdéhyde est le glutaraldéhyde présent dans une quantité de 0,1 à 10% en poids par rapport au composé de polyacrylamide.

9. Béton contenant une composition de ciment selon l'une quelconque des revendications précédentes, et un granulat.

10. Mortier contenant une composition de ciment selon l'une des revendications 1 à 8, et du sable.